# EUROPÄISCHE PATENTANMELDUNG

(11) **EP 4 257 854 A1**
(43) Veröffentlichungstag der Anmeldung: **11.10.2023**
(21) Anmeldenummer: 23158667.8
(22) Anmeldetag: 27.02.2023
(51) Int. Cl.: F16K 11/085, F16K 5/04, F16K 37/00, F16K 31/04, F24D 3/10, F24D 19/10, F24H 15/144, F24H 15/212, F24H 15/238, F24H 15/12

(54) **VENTIL ZUR DURCHFLUSSREGELUNG IN EINEM HEIZ- UND/ODER KÜHLSYSTEM**

(30) Priorität: 07.04.2022 DE 102022108365
(71) Anmelder: Berger Holding GmbH & Co. KG, 87700 Memmingen (DE)
(72) Erfinder: KÖRNER, Martin, 88085 Langenargen (DE); MOSER, Thomas, 87463 Dietmannsried (DE)
(74) Vertreter: Lambacher, Michael

(57) **Zusammenfassung**

Es wird ein Ventil (1) zur Durchflussregelung in einem Heiz- und/oder Kühlsystem bereitgestellt. Das Ventil umfasst eine erste Ventileinheit (100) mit einem ersten Ventilelement (110), und eine zweite Ventileinheit (200) mit einem zweiten Ventilelement (210), wobei die erste Ventileinheit und die zweite Ventileinheit jeweils drei Ventilanschüsse (101, 102, 103; 201, 202, 203) aufweisen. Das erste Ventilelement und das zweite Ventilelement sind in einem gemeinsamen Ventilgehäuse (10) derart angeordnet und ausgebildet, dass sie in einer ersten Ventilelementstellung einen ersten Ventilanschluss (101, 201) mit einem dritten Ventilanschluss (103, 203) fluidisch koppeln und in einer zweiten Ventilelementstellung einen zweiten Ventilanschluss (102, 202) mit dem dritten Ventilanschluss (103, 203) fluidisch koppeln. Das erste Ventilelement und das zweite Ventilelement sind mittels einer Betätigungseinrichtung gemeinsam in die erste Ventilelementstellung oder zweite Ventilelementstellung bewegbar. Ferner wird ein das Ventil umfassendes System zur Heizung und/oder Kühlung bereitgestellt. Das Ventil wird ferner zum Detektieren von Leckagen und zum Messen des Verbrauchs von Wärme und/oder Kälte eingesetzt.

## Beschreibung

### Gebiet der Erfindung

Die vorliegende Erfindung betrifft das Gebiet der Klimatechnik. Insbesondere betrifft die vorliegende Erfindung ein Ventil zur Durchflussregelung in einem Heiz- und/oder Kühlsystem. Ferner betrifft die Erfindung ein Heiz- und/oder Kühlsystem, das wenigstens ein derartiges Ventil umfasst.

### Hintergrund

Das Heizen und/oder Kühlen von Gebäuden, insbesondere von Bürogebäuden, ist energieintensiv und kostet viel Geld. Durch automatisierte Überwachung und Regelung der in den Gebäuden verbauten Heiz- und/oder Kühlsysteme kann die Effizienz beim Heizen und/oder Kühlen erheblich gesteigert werden. Hierfür müssen jedoch die Heiz- und/oder Kühlsysteme mit aufwendiger Sensorik und Regelungstechnik ausgestattet oder nachgerüstet werden, die es erlauben, auf der Grundlage gemessener Klimaparameter, wie beispielsweise der Raumtemperatur, die Menge an Wärme- und/oder Kältemittel im Gebäude zu regeln. Die Regelungstechnik umfasst hierbei nicht nur elektronische Rechen- und Steuermodule, welche die Sensorsignale auswerten und basierend darauf entsprechende Steuerbefehle erzeugen, sondern auch in den Heiz- und/oder Kühlkreislauf eingebaute Ventile (Hydraulikventile). Diese werden in Abhängigkeit der empfangenen Steuerbefehle entsprechend geschaltet, um den Durchfluss von Wärme und/oder Kältemittel im Heiz- und/oder Kühlkreislauf entsprechend zu regeln bzw. einzustellen. Zur Betätigung der Ventile müssen ferner geeignete Betätigungsmechanismen (Stellglieder) verbaut werden.

Der Einbau von Sensoren und Regelungstechnikkomponenten in ein Heiz- und/oder Kühlsysteme ist aufwendig, da die einzelnen Komponenten miteinander verdrahtet werden müssen, um die Kommunikation zwischen den Komponenten untereinander sowie die elektrische Versorgung der Komponenten zu gewährleisten. Häufig ist auch der Einbauraum sehr begrenzt, wodurch der Einbau von Ventilen mit Betätigungsmechanismus zusätzlich erschwert wird.

Aus der EP 3 143 315 B1 ist ein kompaktes 6-Wege-Ventil zur Durchflussregelung bekannt, wobei das Ventil aus zwei Ventileinheiten aufgebaut ist. Die erste Ventileinheit umfasst drei Ventilanschlüsse, die mit dem Vorlauf eines Kühlkreislaufs, eines Heizkreislaufes und eines Verbrauchers fluidisch gekoppelt sind. Genauso umfasst die zweite Ventileinheit drei Ventilanschlüsse, die mit dem Rücklauf eines Kühlkreislaufs, eines Heizkreislaufes und eines Verbrauchers fluidisch gekoppelt sind. Die beiden Ventileinheiten sind jeweils in Form von Kugelventilen ausgebildet, wobei die beiden kugelförmigen Ventilelemente über ein separates Kopplungselement miteinander gekoppelt sind. Ferner weisen die beiden kugelförmigen Ventilelemente jeweils eine Durchgangspassage auf, die aus zwei im rechten Winkel zueinander stehende Bohrungen besteht. Die beiden Durchgangspassagen ermöglichen eine wahlweise Kopplung des Verbrauchers mit dem Heizkreislauf und Kühlkreislauf. Das in der EP 3 143 315 B1 gelehrte Ventildesign ist kompakt ausgebildet, ist jedoch aufgrund seiner kugelförmigen Ventilelemente aufwendig in der Herstellung.

Eine Aufgabe der vorliegenden Erfindung ist es, ein Ventil für ein Heiz- und/oder Kühlsystem bereitzustellen, das einfach und kostengünstig in der Herstellung ist, und ferner dazu vorgesehen ist, einen Verbraucher (wie beispielsweise ein Heiz- und/oder Kühlelement) wahlweise mit einem Heiz- und/oder Kühlkreislauf zu koppeln. Ferner soll das Ventil einen hohen Integrationsgrad der Ventilkomponenten aufweisen, um eine kompakte Bauweise zu ermöglichen.

Eine weitere Aufgabe der vorliegenden Erfindung besteht darin, ein Ventil für ein Heiz- und/oder Kühlsystem bereitzustellen, das smart ausgebildet ist und ferner imstande ist, den Durchfluss von Kältemittel und/oder Wärmemittel selbstständig oder zumindest teilselbstständig zu regeln.

Eine weitere Aufgabe der vorliegenden Erfindung besteht darin, ein Ventil für ein Heiz- und/oder Kühlsystem bereitzustellen, das Leckagen selbst erkennen und signalisieren kann.

Eine weitere Aufgabe der vorliegenden Erfindung besteht darin, ein Heiz- und/oder Kühlsystem bereitzustellen, das auf einfache Weise in ein bereits vorhandenes Gebäudeleittechniksystem integrierbar ist.

### Kurzer Abriss

Zur Lösung wenigstens einer der oben genannten Aufgaben wird gemäß einem ersten Aspekt ein Ventil zur Durchflussregelung in einem Heiz- und/oder Kühlsystem bereitgestellt, wobei das Ventil umfasst: eine erste Ventileinheit mit einem ersten Ventilelement, und eine zweite Ventileinheit mit einem zweiten Ventilelement, wobei die erste Ventileinheit und die zweite Ventileinheit jeweils wenigstens drei Ventilanschlüsse aufweisen. Das erste Ventilelement und das zweite Ventilelement sind in einem gemeinsamen Ventilgehäuse derart angeordnet und ausgebildet, dass die beiden Ventilelemente in ihrer jeweiligen Ventileinheit in einer ersten Ventilelementstellung einen ersten Ventilanschluss mit einem dritten Ventilanschluss fluidisch koppeln und in einer zweiten Ventilelementstellung einen zweiten Ventilanschluss mit dem dritten Ventilanschluss fluidisch koppeln, wobei das erste Ventilelement und das zweite Ventilelement mittels einer Betätigungseinrichtung gemeinsam in die erste Ventilelementstellung oder zweite Ventilelementstellung bewegbar sind.

Durch gemeinsame Betätigung der beiden Ventilelemente in die erste Ventilstellung oder zweite Ventilstellung ist es somit möglich, einen mit dem dritten Ventilanschluss einer jeden Ventileinheit gekoppelten Verbraucher (Wärme-/Kälteverbraucher) wahlweise entweder mit einem mit dem ersten Ventilanschluss einer jeden Ventileinheit gekoppelten Heizkreislauf oder mit einem mit dem zweiten Ventilanschluss einer jeden Ventileinheit gekoppelten Kühlreislauf fluidisch zu koppeln. Zur fluidischen Kopplung der Ventilanschüsse kann jedes Ventilelement wenigstens einen Durchgangskanal aufweisen.

Die beiden Ventilelemente können derart ausgebildet sein und ferner im gemeinsamen Ventilgehäuse derart beweglich angeordnet sein, dass sie in einer dritten Ventilstellung den dritten Ventilanschluss der jeweiligen Ventileinheit von dem ersten Ventilanschluss und von dem zweiten Ventilanschuss der jeweiligen Ventileinheit (vollständig) fluidisch entkoppeln. In dieser Ventilstellung befindet sich das Ventil in einer (absoluten) Sperrstellung, so dass kein Wärmemittel oder Kältemittel durch das Ventil fließen kann. Die dritte Ventilstellung kann als separate Ventilstellung realisiert sein. Gemäß einer Variante kann die dritte Ventilstellung zwischen der ersten Ventilstellung und der zweiten Ventilstellung angeordnet sein.

Die beiden Ventilelemente können Teil eines gemeinsamen, bevorzugt einstückig ausgebildeten, Ventilelements sein. Dieses kann um seine Drehachse drehbar im gemeinsamen Ventilgehäuse aufgenommen sein. Insbesondere kann das gemeinsame Ventilelement zylinderförmig ausgebildet sein (also als einheitlicher Zylinderkörper ausgestaltet sein). Die einstückige Ausbildung der beiden Ventilelemente ermöglicht eine besonders kompakte Bauweise des Ventils. Ferner wird die Anzahl der Ventilkomponenten reduziert, wodurch der Zusammenbau des Ventils vereinfacht wird.

Alternativ können die beiden Ventilelemente als eigenständige Ventilelemente ausgebildet sein. Diese können über ein Kopplungselement oder auch direkt miteinander mechanisch verbunden sein. Insbesondere können die beiden Ventilelemente jeweils zylinderförmig ausgebildet sein (also zwei Zylinderkörper, die direkt oder über ein Kopplungselement miteinander verbunden sind). Die zylinderförmige Ausgestaltung der beiden Ventilelemente erleichtert die Herstellung und bewegliche Lagerung der beiden Ventilelemente im gemeinsamen Ventilgehäuse.

In jedem der beiden Ventilelemente kann ein Durchgangskanal derart ausgebildet sein, dass er in der ersten Ventilstellung den ersten Ventilanschluss mit dem dritten Ventilanschluss und in der zweiten Ventilstellung den zweiten Ventilanschluss mit dem dritten Ventilanschluss fluidisch koppelt. Der Durchgangskanal der beiden Ventilelemente kann ferner jeweils derart ausgebildet sein, dass er in einer dritten Ventilstellung den dritten Ventilanschluss von dem ersten Ventilanschluss und von dem zweiten Ventilanschluss (vollständig) entkoppelt. Auf diese Weise wird die oben beschriebene Sperrstellung realisiert.

Der Durchgangskanal eines jeden (zylinderförmigen) Ventilelements kann im Inneren des jeweiligen Ventilelements ausgebildet sein (beispielsweise im Zylinderkörper bei zylinderförmiger Ausgestaltung des Ventilelements). Der Durchgangskanal eines jeden Ventilelements kann zwei Kanalöffnungen aufweisen, die an der Außenseite des Ventilelements (beispielsweise am Zylindermantel bei zylinderförmiger Ausgestaltung des Ventilelements) in einem Winkelabstand von im Wesentlichen 90° voneinander angeordnet sind. Andere Winkelabstände der beiden Kanalöffnungen sind ebenso denkbar.

Im Inneren eines jeden Ventilelements kann der Durchgangskanal in einer im Wesentlichen senkrecht zur Drehachse des jeweiligen Ventilelements verlaufenden gedachten Ebene angeordnet sein. Sind die beiden Ventilelemente zu einem einzigen Ventilelement integriert, so können die beiden Durchgangskanäle in zwei senkrecht zur Drehachse des jeweiligen Ventilelements verlaufenden gedachten Ebenen liegen, die zueinander denselben axialen Abstand aufweisen, wie der axiale Abstand der Ventilanschlüsse der beiden Ventileinheiten zueinander. Somit können bei Betätigung (Drehung) des gemeinsamen Ventilelements, die beiden Durchgangskanäle mit den jeweiligen Ventilanschlüssen der ersten und zweiten Ventileinheit in Deckung gebracht (und somit fluidisch gekoppelt) werden.

Unabhängig von der hier beschriebenen Ausgestaltung der beiden Ventilelemente als separate Ventilelemente oder als Teil eines gemeinsamen Ventilelements (z.B. einstückige Ausgestaltung) kann der Durchgangskanal eines jeden Ventilelements wenigstens zwei Kanalabschnitte aufweisen. Diese können als Bohrungen realisiert sein.

Die wenigstens zwei Kanalabschnitte eines jeden Durchgangskanals können in der gedachten Ebene derart zueinander angeordnet sein, dass sie sich im Inneren des jeweiligen Ventilelements in einem Winkel von größer 90° treffen. Mit anderen Worten sind die beiden Kanalabschnitte eines jeden Durchgangskanals in einem Winkel von größer 90° zueinander angeordnet. Ferner können die wenigstens zwei Kanalabschnitte zur Außenseite des Ventilelements hin jeweils in einem schrägen Winkel austreten. Durch die hier beschriebene schräge (und somit nicht-orthogonale) Anordnung der wenigstens zwei Kanalabschnitte zueinander entsteht insgesamt ein Durchgangskanal mit verbesserten Strömungseigenschaften. Denn dadurch, dass die einzelnen Kanalabschnitte keine rechtwinklige Abzweigung im Durchgangskanal realisieren und somit sanfter ineinander übergehen, können das Wärmemittel und/oder Kältemittel mit geringerem Fließwiderstand durch das Ventil fließen. Somit kann die Durchflussrate erhöht werden, Verwirbelungen und Druckunterschiede im Ventil erheblich reduziert werden und die Geräuschentwicklung im Ventil deutlich verringert werden.

Das Ventilgehäuse kann hohlzylinderförmig ausgebildet sein oder zumindest einen zylinderförmigen Aufnahmeraum zur beweglichen Aufnahme der beiden Ventilelemente aufweisen. Das hohlzylinderförmige Ventilgehäuse oder der zylinderförmige Aufnahmeraum kann eine zylinderförmige Innenwand aufweisen, die mit den beiden Ventilelementen derart zusammenwirkt, dass Fluid durch die beiden Durchgangskanäle nur strömen kann, wenn diese in Kontakt mit den Ventilöffnungen der beiden Ventileinheiten gebracht werden. Ein Vorteil der hier beschriebenen zylinderförmigen Ausbildung der Ventilelemente und des Ventilgehäuses besteht darin, dass das erfindungsgemäße Ventil im Vergleich zu anderen Ventildesigns, wie beispielsweise einem Kugelventildesign, wesentlich einfacher und kostengünstiger hergestellt werden kann und dennoch präzise arbeitet. Die beiden Ventilelemente können im Gehäuse wesentlich leichter eingebaut, gelagert, fluidisch zueinander und nach Außen abgedichtet werden als vergleichbare Kugelventile.

Wie oben beschrieben, können die beiden Ventilelemente gemeinsam mittels einer Betätigungseinrichtung bewegt werden. Hierfür kann das Ventil eine Betätigungseinrichtung umfassen. Diese kann im Ventilgehäuse integriert sein oder (direkt) am Ventilgehäuse montiert sein. Die Betätigungseinrichtung kann einen Motor oder Schrittmotor aufweisen, um die beiden Ventilelemente kontinuierlich oder schrittweise zu bewegen (rotieren). Der Motor oder Schrittmotor kann über eine entlang einer gemeinsamen Drehachse der beiden Ventilelemente angeordnete Drehwelle mit den beiden Ventilelementen mechanisch gekoppelt sein.

Die Betätigungseinrichtung ist dazu vorgesehen, die beiden Ventilelemente zwischen der ersten Ventilstellung und der zweiten Ventilstellung hin und her zu bewegen (rotieren). Weist das Ventil eine dritte Ventilstellung (z.B. Sperrstellung) auf, so kann die Betätigungseinrichtung ferner dazu vorgesehen sein, die beiden Ventilelemente bei Bedarf in die Sperrstellung zu bewegen (rotieren).

Die Betätigung der Drehwelle und somit der beiden Ventilelemente zwischen den oben beschriebenen Ventilstellungen kann kontinuierlich oder schrittweise erfolgen. Insbesondere kann die Betätigungseinrichtung dazu ausgelegt sein, die beiden Ventilelemente in eine beliebige Zwischenstellung zwischen der ersten Ventilstellung und der zweiten Ventilstellung zu bewegen (rotieren), um den Durchfluss von Wärmemittel und/oder Kältemittel zu regeln. Der Motor oder Schrittmotor kann direkt mit der Drehwelle gekoppelt sein, um eine kompakte Bauweise zu ermöglichen.

Das Ventil kann ferner eine Sensoreinrichtung umfassen. Insbesondere kann die Sensoreinrichtung an dem Ventil (Ventilgehäuse) montiert bzw. in diesem integriert sein. Die Sensoreinrichtung kann dazu vorgesehen sein, die Temperatur und/oder den Durchfluss (bzw. Durchflussrate) des durch das Ventil fließenden Fluids (Wärmemittel und/oder Kältemittel) zu messen. Hierfür kann die Sensoreinrichtung wenigstens einen Temperatursensor umfassen, der zur Messung der Temperatur des durch das Ventil strömenden Fluids vorgesehen ist. Der wenigstens eine Temperatursensor kann in oder in der Nähe der ersten Ventileinheit angeordnet sein.

Gemäß einer Weiterbildung kann die Sensoreinrichtung wenigstens zwei Temperatursensoren umfassen, wobei ein erster Temperatursensor in oder in der Nähe der ersten Ventileinheit angeordnet ist, um die Temperatur des Wärmemittels und/oder Kältemittels beim Durchfluss durch die erste Ventileinheit zu messen. Ein zweiter Temperatursensor kann in oder in der Nähe der zweiten Ventileinheit angeordnet sein, um die Temperatur des Wärmemittels und/oder Kältemittels beim Durchfluss durch die zweite Ventileinheit zu messen.

Zusätzlich oder alternativ zu dem wenigstens einen Temperatursensor kann die Sensoreinrichtung wenigstens einen Strömungssensor umfassen, der zur Messung des Durchflusses des durch das Ventil strömenden Wärmemittels und/oder Kältemittels vorgesehen ist. Der wenigstens eine Strömungssensor kann in oder in der Nähe der ersten Ventileinheit und/oder in oder in der Nähe der zweiten Ventileinheit angeordnet sein. Aus dem erfassten Durchfluss (Volumenstrom) und der erfassten Temperaturdifferenz des durch das Ventil strömenden Fluids kann die verbrauchte Wärmemenge und/oder Kältemenge ermittelt werden.

Gemäß einer Weiterbildung kann die Sensoreinrichtung wenigstens zwei Strömungssensoren umfassen, wobei ein erster Strömungssensor in oder in der ersten Ventileinheit angeordnet sein kann, um den Durchfluss bzw. die Durchflussrate des durch die erste Ventileinheit strömenden Wärmemittels und/oder Kältemittels zu messen. Ein zweiter Strömungssensor kann in oder in der zweiten Ventileinheit angeordnet sein, um den Durchfluss bzw. die Durchflussrate des durch die zweite Ventileinheit strömenden Wärmemittels und/oder Kältemittels zu messen. Aus einer erfassten Durchfluss-Differenz zwischen der ersten Ventileinheit und der zweiten Ventileinheit kann auf eine Leckage im Verbraucherkreislauf geschlossen werden.

Das Ventil kann ferner eine Steuereinrichtung umfassen. Insbesondere kann die Steuereinrichtung an dem Ventil montiert bzw. in diesem integriert sein. Die Steuereinrichtung kann dazu vorgesehen sein, die von der Sensoreinrichtung bereitgestellten Sensordaten (Temperaturmesswerte und/oder Durchflussratenwerte) auszulesen und/oder auszuwerten. Ferner kann die Steuereinrichtung dazu vorgesehen sein, die Betätigungseinrichtung (mit Hilfe von durch die Steuereinrichtung erzeugten Steuerbefehlen) anzusteuern. Die Ansteuerung der Betätigungseinrichtung kann auf der Grundlage der erfassten Sensordaten und/oder weiterer externer Sensordaten und Steuerbefehle erfolgen. Zur Durchführung der hier beschriebenen Steuer- und Auswerteoperationen kann die Steuereinheit wenigstens einen Prozessor, wenigstens einen Speicher und/oder wenigstens eine Kommunikationsschnittstelle umfassen.

Durch die beschriebene Integration von Steuereinrichtung und Sensoreinrichtung im Ventil, wird das Ventil zu einem smarten Ventil, das sich selbst regeln kann. Es kann selbstständig den Durchfluss des durch das Ventil strömenden Fluids auf der Grundlage der erfassten Durchflussratenwerte und Temperaturwerte regeln. Die Kommunikationswege zwischen der Sensoreinrichtung, der Steuereinrichtung und der Betätigungseinrichtung sind kurz, da diese Einrichtungen am Ventil verbaut bzw. dort integriert sind, womit auch ein Großteil der Verkabelung zwischen den einzelnen Komponenten wegfällt bzw. eingespart werden kann. Die Verkabelung des smarten Ventils mit der Außenwelt kann auf eine elektrische Leistungszufuhr und auf wenige bzw. eine Datenleitung(en) zur Kommunikation mit der Außenwelt (beispielweise mit externen Temperatursensoren und/oder einer Gebäudeleitstelle) beschränkt bleiben.

Gemäß einem weiteren Aspekt der Erfindung wird ein System zur Heizung und/oder Kühlung bereitgestellt, wobei das System umfasst: einen Heizkreislauf zur Bereitstellung von Wärme; einen Kühlkreislauf zur Bereitstellung von Kälte; und das oben beschriebene Ventil zum wahlweisen (fluidischen) Koppeln des Heizkreislaufs und des Kühlkreislaufs mit einem Verbraucher. Der Verbraucher kann ein Wärmeverbraucher und/oder ein Kälteverbraucher sein (beispielsweise eine Klimaanlage).

Der Verbraucher kann mit dem dritten Ventilanschluss der beiden Ventileinheiten des Ventils gekoppelt sein. Der Heizkreislauf kann mit dem ersten oder zweiten Ventilanschluss der beiden Ventileinheiten des Ventils gekoppelt sein. Der Kühlkreislauf kann mit dem zweiten oder ersten Ventilanschluss der beiden Ventileinheiten des Ventils gekoppelt sein. Durch die hier beschriebene Kopplung von Heizkreislauf, Kühlkreislauf und Verbraucher mit dem Ventil ist es möglich, den Verbraucher wahlweise mit dem Heizkreislauf und Kühlkreislauf zu koppeln. Die wahlweise Kopplung des Verbrauchers mit dem Heizkreislauf oder Kühlkreislauf kann das Ventil selbstständig, beispielsweise auf der Grundlage von Sensordaten, steuern.

Gemäß einem weiteren Aspekt der Erfindung wird ein Verfahren zum Messen der einem Verbraucher zugeführten Wärmemenge und/oder Kältemenge bereitgestellt. Das Verfahren wird mit Hilfe des oben beschriebenen Ventils durchgeführt, das dazu ausgelegt ist, den Verbraucher mit einem Heizkreislauf und/oder einem Kühlkreislauf wahlweise fluidisch zu koppeln. Das Verfahren umfasst die folgenden Schritte: Messen der Temperatur des durch die erste Ventileinheit des Ventils strömenden und dem Verbraucher zugeführten Wärmemittels und/oder Kältemittels; Messen der Temperatur des durch die zweite Ventileinheit des Ventils strömenden und vom Verbraucher abgeführten Wärmemittels und/oder Kältemittels; Messen der Durchflussrate des durch die erste Ventileinheit strömenden Wärmemittels und/oder Kältemittels, und/oder Messen der Durchflussrate des durch die zweite Ventileinheit strömenden Wärmemittels und/oder Kältemittels; Ermitteln einer Temperaturdifferenz aus der erfassten Temperatur des durch die erste Ventileinheit strömenden Wärmemittels und/oder Kältemittels sowie aus der erfassten Temperatur des durch die zweite Ventileinheit strömenden Wärmemittels und/oder Kältemittels; und Bestimmen der dem Verbraucher zugeführten Wärmemenge und/oder Kältemenge aus der ermittelten Temperaturdifferenz und der gemessenen Durchflussrate.

Die Messung der Temperaturen des Wärmemittels und/oder Kältemittels in den beiden Ventileinheiten sowie die Messung der Durchflussrate des Wärmemittels und/oder Kältemittels in der ersten Ventileinheit und/oder in der zweiten Ventileinheit können im Wesentlichen kontinuierlich oder quasikontinuierlich (in zeitlich festgelegten Abständen wiederkehrend) erfolgen.

Insbesondere können die vom Kältemittel stammenden Temperaturmesswerte und Durchflussratenmesswerte separat von den vom Wärmemittel stammenden Temperaturmesswerten und Durchflussratenmesswerten geloggt werden, um die verbrauchte Wärmemenge und Kältemenge getrennt voneinander bestimmen zu können. Das Loggen der Sensormesswerte kann beispielsweise anhand der Ventilstellung (erste Ventilstellung, zweite Ventilstellung) erfolgen.

Gemäß einem weiteren Aspekt der Erfindung wird ein Verfahren zum Detektieren einer Leckage in einem Heiz- und/oder Kühlkreislauf bereitgestellt. Das Verfahren wird mit Hilfe des oben beschriebenen Ventils durchgeführt, das dazu ausgelegt ist, einen Verbraucher mit dem Heizkreislauf und/oder dem Kühlkreislauf wahlweise fluidisch zu koppeln. Das Verfahren umfasst folgende Schritte: Messen der Durchflussrate des durch eine erste Ventileinheit strömenden und dem Verbraucher zugeführten Wärmemittels und/oder Kältemittels; Messen der Durchflussrate des durch die zweite Ventileinheit strömenden und von dem Verbraucher abgeführten Wärmemittels und/oder Kältemittels; und Bestimmen, dass eine Leckage vorliegt, wenn eine Differenz aus den in der ersten Ventileinheit und der zweiten Ventileinheit gemessenen Durchflussraten einen vorgegebenen Schwellenwert überschreitet.

Wird der vorgegebene Schwellenwert überschritten, so kann das Verfahren ferner folgende Schritte umfassen: Automatisches Schalten des Ventils in eine Sperrstellung; und/oder Erzeugen und Ausgeben eines Leckage-Warnsignals. Das Leckage-Warnsignals kann ein optische, akustisches oder ein anderweitiges Warnsignal sein.

### Kurze Beschreibung der Zeichnungen

Weitere Vorteile und Aspekte der Erfindung werden anhand der nachfolgenden Zeichnungen exemplarisch beschrieben. Es zeigen:
- Figuren 1a und 1b: eine dreidimensionale Ansicht sowie eine Schnittansicht eines Ventils gemäß der vorliegenden Erfindung;
- Figuren 2a bis 2c: weitere Darstellungen eines erfindungsgemäßen Ventils;
- Figur 3: ein Flussdiagramm, welches ein Verfahren zum Messen der einem Verbraucher zugeführten Wärmemenge und/oder Kältemenge mit Hilfe eines der oben beschriebenen Ventile zeigt; und
- Figur 4: ein weiteres Flussdiagramm, welches ein Verfahren zum Detektieren einer Leckage in einem Heiz- und/oder Kühlkreislauf mit Hilfe eines der oben beschriebenen Ventile zeigt.

### Detaillierte Beschreibung

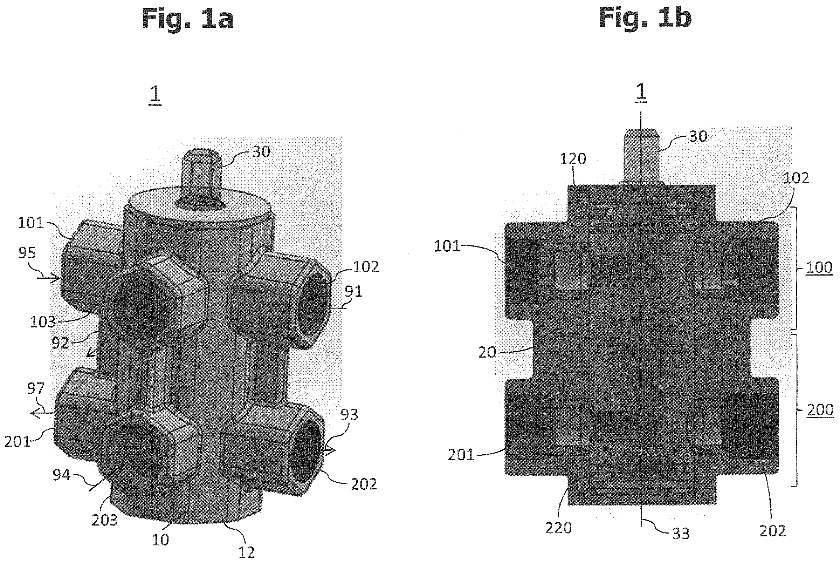

Im Folgenden wird nun Bezug auf die Figuren 1a und 1b genommen. Figur 1a zeigt eine dreidimensionale Ansicht eines Ventils 1 gemäß der vorliegenden Erfindung. Figur 1b zeigt eine Schnittansicht des in Figur 1a dargestellten Ventils 1.

Das Ventil 1 ist zur Durchflussregelung in einem Heiz- und/oder Kühlsystem ausgelegt. Insbesondere kann das Ventil 1 mit einem Heiz- und/oder Kühlkreislauf fluidisch gekoppelt werden, um beispielsweise einen Verbraucher (wie z.B. ein in einem Gebäude installiertes Heiz- und/oder Kühlelement) wahlweise mit Wärme oder Kälte zu versorgen.

Der Heiz- und Kühlkreislauf wird in der Figur 1a lediglich durch die Pfeile 91, 93, 95 und 97 angedeutet. Der Verbraucherkreislauf wird in der Figur 1a lediglich durch die Pfeile 92, 94 angedeutet. Der Heiz- und Kühlkreislauf kann ein herkömmlicher Heiz- und Kühlkreislauf sein, der beispielsweise in einem Gebäude installiert ist, um einem im Gebäude installierten Heiz-bzw. Kälteelement Wärme oder Kälte zuzuführen. Als Wärmemittel und/oder Kältemittel kann jedes Mittel zum Einsatz kommen, das zum Transport von Wärme und/oder Kälte geeignet ist. Beispielsweise kann zum Transport von Wärme und/oder Kälte Wasser oder ein anderweitiges Fluid mit hoher Wärmekapazität zum Einsatz kommen.

Das Ventil 1 umfasst eine erste Ventileinheit 100 und eine zweite Ventileinheit 200. Die erste Ventileinheit 100 weist drei Anschlüsse 101, 102, 103 auf. Ferner weist die zweite Ventileinheit 200 drei Anschlüsse 201, 202, 203 auf (siehe Figur 1a). Das Ventil 100 ist somit ein 6-Wege-Ventil mit jeweils drei Ventilanschlüssen für die erste Ventileinheit 100 und drei Ventilanschlüssen für die zweite Ventileinheit 200.

Das Ventil 1 umfasst ferner ein Ventilgehäuse 10. Das Ventilgehäuse 10 weist einen Innenraum 20 (siehe Figur 1b) zur Aufnahme wenigstens eines Ventilelements auf, wie weiter unten noch näher beschrieben wird. Das Ventilgehäuse 10 ist als gemeinsames Ventilgehäuse für die beiden Ventileinheiten 100, 200 ausgebildet. Mit anderen Worten werden die beiden Ventileinheiten 100, 200 durch das gemeinsame Ventilgehäuse 10 zu einem einzigen Ventil integriert. Durch diese Integration wird eine besonders kompakte Bauweise des Ventils 1 ermöglicht. Ferner wird durch das einheitliche Gehäuse 10 die Anzahl der Ventilkomponenten reduziert, wodurch die Montage erleichtert wird.

Das Ventilgehäuse 10 ist bei dem in den Figuren 1a und 1b gezeigten Ventil 1 hohlzylinderförmig ausgebildet. Es versteht sich, dass andere, von der Hohlzylinderform abweichende Ventilgehäuse 10 ebenso denkbar sind.

Die Anschlüsse 101, 102, 103 der ersten Ventileinheit 100 sind am Hohlzylindermantel 12 des Ventilgehäuses 10 angeordnet. Die Anschlüsse 101, 102, 103 der ersten Ventileinheit 100 sind hierbei auf einer vorgegebenen, ersten axialen Höhe am Hohlzylindermantel 12 angeordnet und weisen in Umfangsrichtung einen Winkelabstand von (in etwa) 90° zueinander auf. Genauso sind die Anschlüsse 201, 202, 203 der zweiten Ventileinheit 200 am Hohlzylindermantel 12 des Ventilgehäuses 10 angeordnet. Die Anschlüsse 201, 202, 203 der zweiten Ventileinheit 200 sind auf einer vorgegebenen, zweiten axialen Höhe am Hohlzylindermantel 12 angeordnet und weisen in Umfangsrichtung einen Winkelabstand von (in etwa) 90° zueinander auf. Die beiden axialen Höhen sind derart gewählt, dass die Anschlüsse 101, 102, 103 der ersten Ventileinheit 100 bezüglich der Anschlüsse 201, 202, 203 der zweiten Ventileinheit 200 in axialer Richtung des Ventilgehäuses 10 um einen vorgegebenen Abstand versetzt angeordnet sind.

Das Ventil 1 umfasst ferner ein erstes Ventilelement 110 und ein zweites Ventilelement 210 (siehe Figur 1b). Das erste Ventilelement 110 ist der ersten Ventileinheit 100 zugeordnet. Genauso ist das zweite Ventilelement 210 der zweiten Ventileinheit 200 zugeordnet. Das erste Ventilelement 110 und das zweite Ventilelement 210 sind jeweils zylinderförmig ausgestaltet. Das erste Ventilelement 110 und das zweite Ventilelement 210 sind im zylinderförmigen Innenraum 20 des Ventilgehäuses 10 drehbar gelagert aufgenommen, so dass die beiden Ventilelemente 110, 210 um eine gemeinsame Achse 33 drehbar sind. Die gemeinsame Achse 33 entspricht der Achse des zylinderförmigen Innenraums 20 und fällt mit den Achsen der beiden zylinderförmigen Ventilelemente 110, 210 zusammen. Ferner sind die beiden Ventilelemente 110, 210 in axialer Richtung des Innenraums hintereinander derart angeordnet, dass das rotierbare erste Ventilelement 110 mit den Anschlüssen 101, 102, 103 der ersten Ventileinheit 100, und das rotierbare zweite Ventilelement 210 mit den Anschlüssen 201, 202, 203 der zweiten Ventileinheit 200 fluidisch zusammenwirken kann, wie weiter unten noch näher beschrieben wird.

Die beiden zylinderförmigen Ventilelemente 110, 210 können als separate Zylinderelemente ausgebildet sein, die beispielsweise über ein Kopplungselement mechanisch miteinander verbunden sind. Alternativ ist auch denkbar, dass die beiden zylinderförmigen Ventilelemente 110, 210 direkt miteinander verbunden (gekoppelt) sind oder Teil eines gemeinsamen, einstückig ausgebildeten zylinderförmigen Ventilelements sind, das in dem Innenraum 20 drehbar gelagert ist. Die hier gezeigte Implementierung eines gemeinsamen Ventilgehäuses 10 sowie eines gemeinsamen, einstückig ausgebildeten zylinderförmigen Ventilelements 110, 210, das in dem Ventilgehäuse 10 aufgenommen ist, ermöglicht eine kompakte, stabile und kostengünstige Bauweise eines 6-Wege-Ventils.

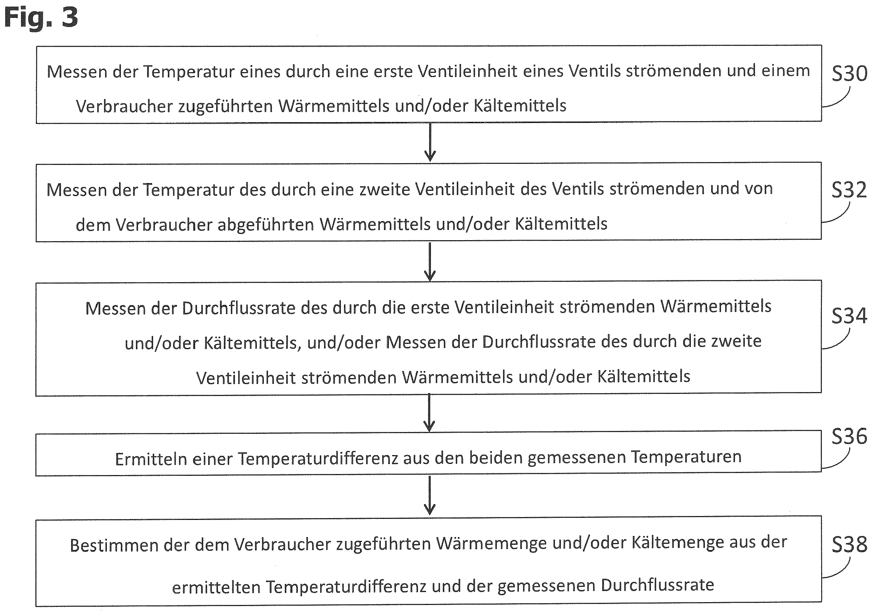

Jedes der beiden zylinderförmigen Ventilelemente 110, 210 weist einen Durchgangskanal 120, 220 auf (siehe Figur 1b). Der Durchgangskanal 120, 220 eines jeden Ventilelements 110, 210 ist in einer Ebene senkrecht zur Achse des jeweiligen Ventilelements 110, 210 im jeweiligen Ventilelement 110, 210 angeordnet. Ferner weist der Durchgangskanal 120, 220 eines jeden Ventilelements 110, 210 zwei Kanalöffnungen auf, die in einem Winkelabstand von (in etwa) 90° am Mantel des jeweiligen zylinderförmigen Ventilelements 110, 210 angeordnet sind (siehe auch Figur 3b). Je nach Drehposition der beiden zylinderförmigen Ventilelemente 110, 210 relativ zum Gehäuse 10 können die beiden Kanalöffnungen eines jeden Ventilelements 110, 210 in Deckung mit dem jeweiligen ersten Ventilanschluss 101, 201 und dem jeweiligen dritten Ventilanschluss 103, 203 der ersten Ventileinheit 100 und der zweiten Ventileinheit 200 gebracht werden (im Folgenden erste Ventilstellung genannt). Alternativ können die beiden Kanalöffnungen eines jeden Ventilelements 110, 210 in Deckung mit dem jeweiligen zweiten Ventilanschluss 102, 202 und dem jeweiligen dritten Ventilanschluss 103, 203 der ersten Ventileinheit 100 und der zweiten Ventileinheit 200 gebracht werden (im Folgenden zweite Ventilstellung).

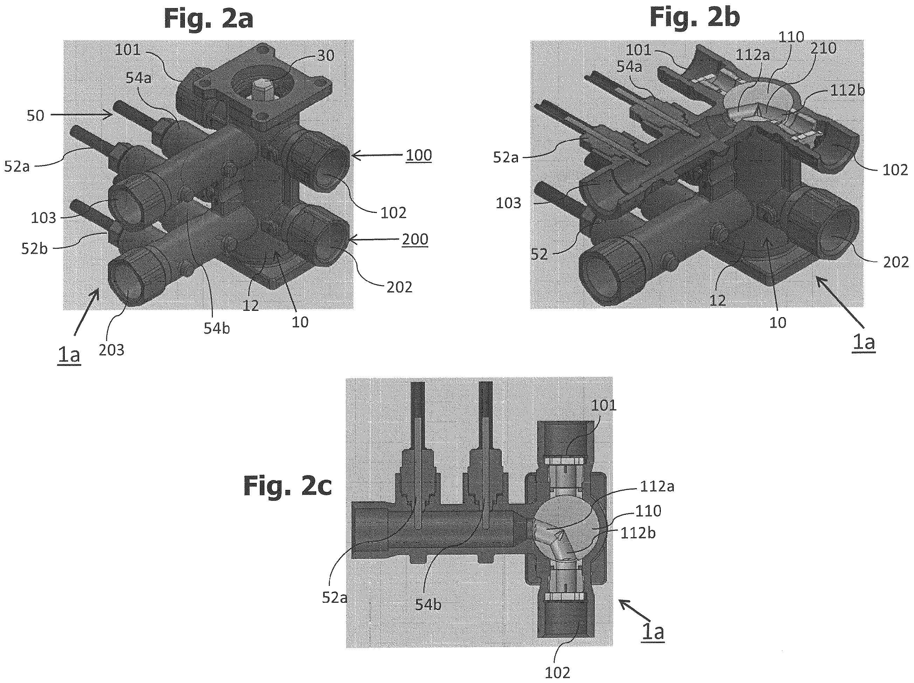

In der ersten Ventilstellung wird somit mit Hilfe des Durchgangskanals 120 des ersten zylinderförmigen Ventilelements 110 der erste Ventilanschluss 101 mit dem dritten Ventilanschluss 103 der ersten Ventileinheit 100 fluidisch gekoppelt. Ferner wird mit Hilfe des Durchgangskanals 220 des zweiten Ventilelements 210 der erste Ventilanschluss 201 mit dem dritten Ventilanschluss 203 der zweiten Ventileinheit 200 fluidisch gekoppelt. In der zweiten Ventilstellung wird mit Hilfe des Durchgangskanals 120 des ersten Ventilelements 110 der zweite Ventilanschluss 102 mit dem dritten Ventilanschluss 103 der ersten Ventileinheit 100 fluidisch gekoppelt (diese Ventilstellung ist beispielsweise in der Figur 2b gezeigt), und mit Hilfe des Durchgangskanals 220 des zweiten Ventilelements 210 der zweite Ventilanschluss 202 mit dem dritten Ventilanschluss 203 der zweiten Ventileinheit 200 fluidisch gekoppelt. Mit Hilfe des beschriebenen Ventils 1 ist es somit möglich einen Verbraucher, der beispielsweise mit den dritten Ventilanschlüssen 103, 203 der beiden Ventileinheiten 100, 200 fluidisch gekoppelt ist, wahlweise mit einem Heizkreislauf und einem Kühlkreislauf fluidisch zu koppeln, wenn beispielsweise die ersten Anschlüsse 101, 201 mit dem Heizkreislauf und die zweiten Anschlüsse 102, 202 der beiden Ventileinheiten 100, 200 mit dem Kühlkreislauf gekoppelt sind. Die Ventilanschlüsse 101, 102, 103 der ersten Ventileinheit 100 können hierbei mit dem Vorlauf (siehe Pfeile 91, 92, 95) von Kühlkreislauf, Heizkreislauf und Verbraucher belegt sein. Entsprechend können die Ventilanschlüsse 201, 202, 203 der zweiten Ventileinheit 200 mit dem Rücklauf (siehe Pfeile 93, 94, 97) von Kühlkreislauf, Heizkreislauf und Verbraucher gekoppelt sein. Eine inverse Belegung, bei der die Rückläufe mit den Anschlüssen (101, 102, 103) der ersten Ventileinheit 100 und die Vorläufe mit den Anschlüssen (201, 202, 203) der zweiten Ventileinheit 200 gekoppelt werden, ist ebenso denkbar.

Das Umschalten von der ersten Ventilstellung zur zweiten Ventilstellung bzw. von der zweiten Ventilstellung zur ersten Ventilstellung kann durch gemeinsame Drehung der beiden zylinderförmigen Ventilelemente 110, 210 leicht bewerkstelligt werden. Aufgrund der Anordnung der Öffnungen der beiden Durchgangskanäle 120, 220 in den beiden Ventilelementen 110, 210 sowie der Anordnungen der Anschlüsse 101, 102, 103, 201, 202, 203 der beiden Ventileinheiten 100, 200 reicht eine 90°-Drehung in eine Drehrichtung aus (beispielsweise im Uhrzeigersinn), um beispielsweise das Ventil 1 von der ersten Ventilstellung zur zweiten Ventilstellung zu schalten. Genauso kann das Ventil 1 durch eine 90° Drehung in eine entgegengesetzte Drehrichtung (also gegen den Uhrzeigersinn) von der zweiten Ventilstellung zur ersten Ventilstellung geschaltet werden. Denkbar ist auch die Drehung der beiden Ventilelemente 110, 210 in eine 45° Zwischenstellung, bei der die Anschlüsse beider Ventileinheiten 100, 200 voneinander entkoppelt sind und somit eine (absolute) Sperrstellung erreicht wird.

Ferner denkbar ist eine graduelle Variation der Drehposition der beiden Ventilelemente 110, 210 in der ersten Ventilstellung oder zweiten Ventilstellung, um den Fluidstrom durch das Ventil 1 zu regeln.

Zur wahlweisen Drehung der beiden Ventilelemente 110, 210 in die erste Ventilstellung oder zweite Ventilstellung oder in die Sperrstellung kann das Ventil 1 mit einer Betätigungseinrichtung (in den Figuren 1a und 1b nicht dargestellt) versehen sein. Die Betätigungseinrichtung kann an einem der beiden axialen Enden des Ventilgehäuses 10 montiert sein. Die Betätigungseinrichtung bzw. der Motor der Betätigungseinrichtung kann (direkt) mit einer Drehwelle 30 gekoppelt sein. Die Montage der Betätigungseinrichtung am axialen Ende des Ventilgehäuses 10 sowie die Kopplung mit der Drehwelle 30 ermöglichen ein kompaktes Ventildesign.

Die Betätigungseinrichtung kann die beiden Ventilelemente 110, 210 über die Drehwelle 30 gleichzeitig betätigen (drehen). Je nach Bedarf kann die Betätigungseinrichtung (bzw. der Motor der Betätigungseinrichtung) die beiden Ventilelemente 110, 210 in die erste oder zweite Ventilstellung oder in die Sperrstellung drehen und somit einen an den dritten Anschlüssen 103, 203 gekoppelten Verbraucher wahlweise mit einem Kühlkreislauf oder Heizkreislauf koppeln oder von beiden Kreisläufen vollständig entkoppeln. Die Ansteuerung der Betätigungseinrichtung kann durch eine externe Steuereinrichtung erfolgen. Bevorzugt ist die Steuereinrichtung jedoch am Ventilgehäuse 10 montiert oder im Ventilgehäuse 10 integriert, um ein smartes Ventil 1 zu realisieren. Die Steuereinrichtung ist in den Figuren 1a und 1b ebenso nicht dargestellt.

In Zusammenhang mit den Figuren 2a, 2b und 2c wird ein Ventil 1a beschrieben, das eine Weiterbildung des Ventils 1 der Figuren 1a und 1b darstellt. Figur 2a zeigt eine isometrische Ansicht, Figur 2b eine horizontale Schnittansicht durch die erste Ventileinheit 100 und Figur 2c eine Draufsicht von oben. Im Folgenden werden Ventilkomponenten, die in ihrer strukturellen Ausgestaltung und Funktion gleich oder ähnlich zu den Ventilkomponenten des Ventils 1 sind, mit denselben Bezugszeichen versehen. Um Wiederholungen zu vermeiden, werden diese Komponenten nicht nochmals beschrieben. Es wird vielmehr auf die obige Beschreibung in Zusammenhang mit den Figuren 1a und 1b verwiesen. Insbesondere weist das Ventil 1a die in Zusammenhang mit den Figuren 1a und 1b beschriebene Betätigungseinrichtung und Steuereinrichtung auf, auch wenn diese Einrichtungen in den Figuren nicht dargestellt sind. Die Betätigungseinrichtung ist am Ventilgehäuse 10 montiert, wie in Zusammenhang mit dem Ventil 1 oben beschrieben. Die Steuereinrichtung ist am Ventilgehäuse 10 montiert oder im Ventilgehäuse 1a integriert. Das Ventil 1a ist wiederum als smartes Ventil ausgeführt.

Mit Hilfe der Figuren 2b und 2c wird zunächst die Ausgestaltung der Durchgangskanäle 110, 210 der beiden Ventileinheiten 100, 200 beschrieben. In den Figuren 2b und 2c ist lediglich der Durchgangskanal 120 zu sehen. Der in den Figuren 2b und 2c nicht sichtbare Durchgangskanal 220 der zweiten Ventileinheit 200 weist jedoch dieselben strukturellen und funktionellen Merkmale auf wie der Durchgangskanal 120 der ersten Ventileinheit 100. Jeder der beiden Durchgangskanäle 120, 220 setzt sich aus zwei Kanalabschnitten 112a, 112b zusammen. Die zwei Kanalabschnitte 112a, 112b können in Form von Bohrungen in den jeweiligen Ventilelementen 110, 210 realisiert sein. Die beiden Kanalabschnitte 112a, 112b sind im Ventilelement 110 derart zueinander angeordnet, dass sie bezüglich der Mittelachsen der Anschlüsse 101, 102, 103 bzw. 201, 202, 203 schräg verlaufen und sich im Inneren der jeweiligen zylinderförmigen Ventilelemente 110, 210 in einem Winkel von größer 90° treffen. Entsprechend treten die beiden Teilkanäle 112a, 112b an der Manteloberfläche der jeweiligen zylinderförmigen Ventilelemente 110, 210 schräg (beispielsweise unter einem Winkel von ungefähr 30° bezüglich der Normalen der Manteloberfläche) aus den jeweiligen zylinderförmigen Ventilelementen 110, 210 aus (und nicht parallel zur Normalen der Manteloberfläche, wie bei einer herkömmlichen Konfiguration, bei der die beiden Teilkanäle rechtwinklig zueinander angeordnet sind). Diese Anordnung der Kanalabschnitte 112a, 112b hat den Vorteil, dass Fluid mit weniger Strömungswiderstand und Verwirbelung durch die beiden Ventilelemente 110, 210 strömen kann. Somit kann die Durchflussrate durch das Ventil 1a optimiert werden. Verwirbelungen und Druckunterschiede werden durch das beschriebene Kanaldesign ebenso verringert. Ferner wird die Geräuschentwicklung im Ventil 1a verringert.

Das in Zusammenhang mit den Figuren 2a-2c beschriebene Design der beiden Durchgangskanäle 120, 220 kann auch auf das Ventil 1 der Figuren 1a und 1b übertragen werden.

Das Ventil 1a der Figuren 2a-2c unterscheidet sich vom Ventil 1 der Figuren 1a vor allem darin, dass im Ventil 1a zusätzlich eine Sensoreinrichtung 50 integriert ist.

Die Sensoreinrichtung 50 umfasst einen ersten Temperatursensor 52a sowie einen ersten Strömungssensor 54a. Der erste Temperatursensor 52a sowie der erste Strömungssensor 54a sind am oder in der Nähe des dritten Ventilanschlusses 103 der ersten Ventileinheit 100 (Vorlauf Verbraucher) angeordnet. Mittels des ersten Temperatursensors 52a und des ersten Strömungssensors 54a ist es möglich, die Temperatur und die Durchflussrate (Volumenstrom) des Kältemittels und/oder Wärmemittels (bevorzugt in Echtzeit) zu bestimmen. Die Steuereinrichtung kann auf der Grundlage der erfassten Temperatur und der Durchflussrate des Kältemittels und/oder Wärmemittels die aktuelle Heizleistung und/oder Kühlleistung nachregeln, sofern ein am Verbraucher oder Raumthermostat oder ähnliches eingestellter SOLL-Wert einer Raumtemperatur von einem gemessenen IST-Wert abweicht. Die Nachregelung erfolgt durch Erzeugung entsprechender Steuersignale für die Betätigungseinrichtung. Die Betätigungseinrichtung ist dazu ausgelegt, in Abhängigkeit des/der erfassten Steuersignals/Steuersignale die Ventilstellung der beiden Ventilelemente 110, 210 zu ändern. Die Änderung kann in einem Umschalten der beiden Ventilelemente 110, 210 von beispielsweise der ersten Ventilstellung in die zweite Ventilstellung oder dritte Ventilstellung umfassen und/oder ein graduelles Ändern der Stellung der beiden Ventilelemente 110, 210, wenn diese sich in der ersten oder zweiten Ventilstellung befinden. Die graduelle Änderung der Stellung der Ventilelemente 110, 210 ermöglicht eine (proportionale) Regelung des Durchflusses des Wärmemittels und/oder Kältemittels. Ein separater hydraulischer Druckabgleich wird dadurch überflüssig.

Die Sensoreinrichtung 50 des Ventils 1a kann ferner einen zweiten Temperatursensor 52b sowie einen zweiten Strömungssensor 54b umfassen. Der zweite Temperatursensor 52b sowie der zweite Strömungssensor 54b sind am oder in der Nähe des dritten Ventilanschlusses 203 der zweiten Ventileinheit 200 (Rücklauf Verbraucher) angeordnet.

Die Temperatursensoren 52a, 52b können stromabwärts zu den jeweiligen Strömungssensoren 54a, 54b angeordnet sein. Als Temperatursensoren 52a, 52b können handelsübliche Temperatursensoren zum Einsatz kommen. Als Strömungssensoren 54a, 54b können ebenso handelsübliche Strömungssensoren zum Einsatz kommen. Denkbar ist jedoch auch eine indirekte Strömungsmessung. In diesem Fall kann zumindest der Strömungssensor 54a im Vorlaufanschluss ein Heizelement sein, das auf einer SOLL-Temperatur Tₛₒₗₗ gehalten wird, die von der IST-Temperatur Tᵢₛₜ des durchströmenden Fluids (gemessen durch den Temperatursensor 52a) um einen Wert ΔT abweichen kann (also Tₛₒₗₗ = Tᵢₛₜ + ΔT). Die vom Heizelement abtransportierte Wärmeenergie ist direkt proportional zur Temperaturdifferenz ΔT und zur Durchflussrate (Volumenstrom) des Fluids im Ventil 1a. Durch Messung der durch das Heizelement zugeführten Wärmemenge kann somit die Durchflussrate (und somit der Volumenstrom) des durch das Ventil 1a strömenden Fluids bestimmt werden.

Durch Vergleich der Durchflussratenwerte, die durch die Strömungssensoren 54a, 54b am Ventilanschluss 103 (Vorlauf) und am Ventilanschluss 203 (Rücklauf) gemessen werden, können Abweichungen (Differenzen) zwischen den am Ventilvorlauf und am Ventilrücklauf gemessenen Durchflussraten ermittelt werden. Diese Vergleichsauswertung kann durch die Steuereinrichtung am Ventil 1a im Wesentlichen in Echtzeit erfolgen. Überschreitet ein ermittelter Differenzwert einen vorgegebenen Toleranzwert (Schwellenwert), so ist dies ein Hinweis darauf, dass der Kreislauf zwischen den beiden Strömungsmesspunkten ein Leck aufweist. Die Steuereinrichtung kann in diesem Fall das Ventil 1a automatisch in die Sperrstellung schalten. Sie kann ferner ein Warnsignal erzeugen und ausgeben (beispielsweise an eine Gebäudeleitstelle).

Durch Vergleich der an den Ventilanschlüssen 103 und 203 gemessenen Durchflussratenwerte und Temperaturwerte kann mit Hilfe der Steuereinrichtung ferner die an den Verbraucher abgegebene Wärmemenge bzw. Kältemenge ermittelt werden. Die verbrauchte Wärmemenge und/oder Kältemenge kann mit Hilfe der Steuereinrichtung über einen gewünschten Zeitraum erfasst werden. Insbesondere ist es mit dem hier beschriebenen smarten Ventil 1a möglich, den Verbrauch von Wärme und Kälte separat zu ermitteln.

In Zusammenhang mit dem Flussdiagramm in Figur 3 wird nun ein Verfahren zum Messen der einem Verbraucher zugeführten Wärmemenge und/oder Kältemenge weiter beschrieben. Das Verfahren wird mit Hilfe des oben beschriebenen Ventils 1a durchgeführt, das dazu ausgelegt ist, einen Verbraucher mit einem Heizkreislauf und/oder einem Kühlkreislauf wahlweise fluidisch zu koppeln. Das Verfahren umfasst die Schritte S20, S32, S34, S36 und S38, die nachfolgend näher beschrieben werden.

Der Verfahrensschritt S30 umfasst ein Messen der Temperatur des durch die erste Ventileinheit 100 des Ventils 1a strömenden und dem Verbraucher zugeführten Wärmemittels und/oder Kältemittels. Der Verfahrensschritt S30 kann mit Hilfe der oben beschriebenen Sensoreinrichtung 50 des Ventils 1a, insbesondere mit Hilfe des in der ersten Ventileinheit 100 angeordneten Temperatursensors 52a, durchgeführt werden.

Der Verfahrensschritt S32 umfasst ein Messen der Temperatur des durch die zweite Ventileinheit 200 des Ventils 1a strömenden und vom Verbraucher abgeführten Wärmemittels und/oder Kältemittels. Dieser Verfahrensschritt kann mit Hilfe der oben beschriebenen Sensoreinrichtung 50, insbesondere mit Hilfe des Temperatursensors 52b, welcher in der zweiten Ventileinheit 200 angeordnet ist, erfolgen.

Der Verfahrensschritt S34 umfasst ein Messen der Durchflussrate des durch die erste Ventileinheit 100 strömenden Wärmemittels und/oder Kältemittels. Zusätzlich oder alternativ kann der Schritt S34 auch ein Messen der Durchflussrate des durch die zweite Ventileinheit 200 strömenden Wärmemittels und/oder Kältemittels umfassen. Das Messen der Durchflussrate wird mit Hilfe der oben beschriebenen Sensoreinrichtung 50, insbesondere mit einem der beiden Strömungssensoren 54a, 54b oder mit beiden Strömungssensoren 54a, 54b, durchgeführt.

Der Verfahrensschritt S36 umfasst ein Ermitteln einer Temperaturdifferenz aus den beiden gemessenen Temperaturen. Konkret umfasst der Schritt S36 ein Ermitteln der Temperaturdifferenz aus der gemessenen Temperatur (Temperaturwert) des durch die erste Ventileinheit strömenden Wärmemittels und/oder Kältemittels sowie aus der erfassten Temperatur (Temperaturwert) des durch die zweite Ventileinheit strömenden Wärmemittels und/oder Kältemittels. Verfahrensschritt 36 kann mit Hilfe der oben beschriebenen Steuereinrichtung (bzw. einem Prozessor der oben beschriebenen Steuereinrichtung) durchgeführt werden. Alternativ ist auch denkbar, dass die gemessenen Temperaturwerte und Durchflussratenwerte an eine externe Recheneinheit kommuniziert werden (beispielsweise durch ein am Ventil 1a verbautes oder im Ventil 1a integriertes Kommunikationsmodul) und dort weiter verarbeitet werden.

Der Verfahrensschritt S38 umfasst ein Bestimmen der dem Verbraucher zugeführten Wärmemenge und/oder Kältemenge aus der ermittelten Temperaturdifferenz und der gemessenen Durchflussrate. Auch dieser Schritt kann mit Hilfe der oben beschriebenen Steuereinrichtung oder mit Hilfe einer externen Recheneinheit durchgeführt werden.

Die oben beschriebenen Schritte S30, S32 und S34 können im Wesentlichen gleichzeitig durchgeführt werden. Insbesondere können die oben beschriebenen Schritte S30, S32 und S34 im Wesentlichen kontinuierlich oder in vorgegebenen zeitlichen Abständen wiederholt werden. Die gemessenen Temperaturwerte des Fluids in der ersten Ventileinheit 100 und in der zweiten Ventileinheit 200 sowie die gemessenen Durchflussratenwerte in der ersten Ventileinheit und/oder zweiten Ventileinheit 100, 200 können in einem externen Speicher oder alternativ in einem in der Steuereinrichtung vorgesehenen Speicher gespeichert (zwischengespeichert) werden. Es versteht sich für den Fachmann, dass die Messwerte für die Speicherung (und Weiterprozessierung) digitalisiert werden müssen. Die Konvertierung der analogen Sensorwerte zu digitalen Messdaten kann ebenso in der Steuereinrichtung oder direkt am Sensor (bzw. an den Sensoren) erfolgen.

Insbesondere können die dem Kältemittel zuordenbaren gemessenen Temperaturwerte und Durchflussratenwerte getrennt von den dem Wärmemittel zuordenbaren gemessenen Temperaturwerten und Durchflussratenwerten gespeichert werden. Somit ist es möglich, die Kältemenge und die Wärmemenge separat voneinander zu bestimmen und zu loggen, obwohl das Wärmemittel und das Kältemittel durch dasselbe Ventil 1a fließen.

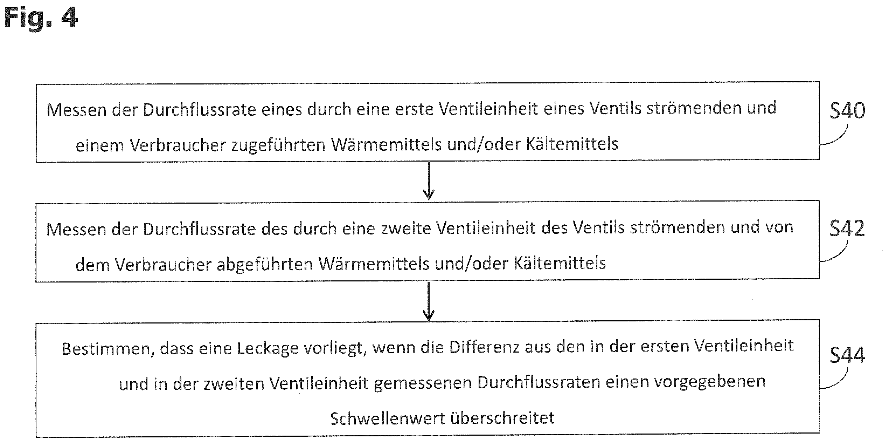

In Zusammenhang mit dem Flussdiagramm in Figur 4 wird nun ein Verfahren zum Detektieren einer Leckage in einem Heiz- und/oder Kühlkreislauf beschrieben. Das Verfahren wird mit Hilfe des oben beschriebenen Ventils 1a durchgeführt und umfasst die Verfahrensschritte S40, S42 und S44, die nachfolgend näher beschrieben werden.

Der Verfahrensschritt S40 umfasst ein Messen der Durchflussrate des durch die erste Ventileinheit 100 des Ventils 1a strömenden und einem Verbraucher zugeführten Wärmemittels und/oder Kältemittels. Das Messen der Durchflussrate wird mit Hilfe der oben beschriebenen Sensoreinrichtung 50, insbesondere mit Hilfe des oben beschriebenen Strömungssensors 54a, durchgeführt, welcher in der ersten Ventileinheit 100 angeordnet ist.

Der Schritt S42 umfasst ein Messen der Durchflussrate des durch die zweite Ventileinheit 200 des Ventils 1a strömenden und vom Verbraucher abgeführten Wärmemittels und/oder Kältemittels. Dieser Verfahrensschritt kann ebenso mit Hilfe der oben beschriebenen Sensoreinrichtung 50, insbesondere mit Hilfe des oben beschriebenen Strömungssensors 54b, welcher in der zweiten Ventileinheit 200 angeordnet ist, durchgeführt werden.

Der Verfahrensschritt S44 umfasst ein Bestimmen, dass eine Leckage vorliegt, wenn eine Differenz aus den in der ersten Ventileinheit 100 und der zweiten Ventileinheit 200 gemessenen Durchflussraten einen vorgegebenen Schwellenwert (Toleranz) überschreitet. Der Schritt S44 kann mit Hilfe der oben beschriebenen Steuereinrichtung am Ventil 1a durchgeführt werden. Alternativ ist auch denkbar, dass Schritt S44 durch eine externe Recheneinheit durchgeführt wird.

Die Verfahrensschritte S40 und S42 können im Wesentlichen gleichzeitig durchgeführt werden. Insbesondere können die Verfahrensschritte S40 und S42 kontinuierlich oder in zeitlich vorgegebenen Abständen wiederholt werden. Der Verfahrensschritt S44 kann unmittelbar nach den Verfahrensschritten S40 und S42 durchgeführt werden, um die Detektion von Leckagen möglichst in Echtzeit zu realisieren.

Sofern im Verfahrensschritt S44 bestimmt wird, dass die Differenz der beiden Durchflussraten im Vorlauf und im Rücklauf (also in der ersten Ventileinheit 100 und in der zweiten Ventileinheit 200) einen vorgegebenen Schwellenwert überschreitet, kann das Verfahren ferner den Schritt des automatischen Schaltens des Ventils in eine Sperrstellung umfassen. Dieser Schritt wird dann mit Hilfe der in dem Ventil 1a implementierten Steuereinrichtung durchgeführt, welche einen entsprechenden Betätigungsbefehl für die Betätigungseinrichtung des Ventils ausgibt. Die Betätigungseinrichtung schaltet dann in Reaktion auf den erfassten Betätigungsbefehl das Ventil 1, 1a in die Sperrstellung.

Sofern im Schritt S44 bestimmt wird, dass eine Leckage in einem Heiz- und/oder Kühlkreislauf vorliegt, kann das Verfahren ferner den Schritt des Erzeugens und Ausgebens eines Leckage-Warnsignals umfassen. Das Leckage-Warnsignal kann ein akustisches Signal, optisches Signal oder ein anderweitiges Signal für eine Gebäudeleitstelle umfassen.

Die in Zusammenhang mit den Figuren 3 und 4 beschriebenen Verfahren können mit Hilfe der in Zusammenhang mit den Figuren 2a bis 2c beschriebenen Sensoreinrichtung 50 im Wesentlichen parallel (gleichzeitig) durchgeführt werden. Denn durch die Temperatursensoren 52a, 52b sowie die Strömungssensoren 54a, 54b werden die Temperaturen in Vorlaufrichtung und Rücklaufrichtung sowie die Durchflussraten des Fluids in Vorlaufrichtung und Rücklaufrichtung hinreichend erfasst, so dass aus diesen Messdaten sowohl die Wärmemenge und/oder Kältemenge als auch eine mögliche Leckage in dem Heiz- und/oder Kühlkreislauf bestimmt werden können.

Das hier beschriebene Ventildesign weist folgende Vorteile auf. Durch die zylinderförmige Ausgestaltung der beiden Ventilelemente ist eine besonders einfache, kostengünstige und kompakte Bauweise eines 6-Wege-Ventils möglich, das in einem Heiz- und/oder Kühlsystem auch bei beengtem Installationsraum gut montiert werden kann. Durch die Verwendung von zylinderförmigen Ventilelementen ist es ferner möglich, diese zu einem einzigen zylinderförmigen Ventilelement zu kombinieren. Verbindungselemente zur Verbindung der beiden Ventilelemente, wie sie beispielsweise bei kugelförmigen Ventilelementen notwendig sind, können entfallen. Ferner kann im Gegensatz zu einem 6-Wege-Ventil mit kugelförmigen Ventilelementen das Ventilgehäuse einfach ausgestaltet werden. So kann beispielsweise das Ventilgehäuse zur Aufnahme der beiden Ventilelemente in Form eines Zylindergehäuses ausgebildet sein. Ferner kann durch das hier beschriebene Design der Durchflusskanäle der beiden Ventilelemente das Strömungsverhalten des Fluids im Ventil deutlich optimiert werden.

Durch die hier beschriebene Integration von Steuereinrichtung, Sensoreinrichtung und Betätigungseinrichtung im Ventil wird das Ventil zu einem smarten Ventil. Es kann sich auf Basis der erfassten Sensordaten im Wesentlichen selbst steuern bzw. regeln. Eine Kommunikation des Ventils mit externen Einheiten (beispielsweise Recheneinheiten oder weiteren Sensoren) kann auf ein Minimum beschränkt bleiben. Ferner kann das Ventil zu Messung der verbrauchten Wärmemenge und/oder Kältemenge ermittelt werden. Die verbrauchte Wärmemenge und Kältemenge können individuell bestimmt werden. Ferner kann das Ventil zur Erkennung und Vorbeugung etwaiger Leckagen in den Fluidkreisläufen eingesetzt werden. Somit leistet das erfindungsgemäße Ventil einen erheblichen Beitrag zur Sicherheit in der Klimatechnik.

## Patentansprüche

1. Ventil (1, 1a) zur Durchflussregelung in einem Heiz- und/oder Kühlsystem, umfassend:
eine erste Ventileinheit (100) mit einem ersten Ventilelement (110), und
eine zweite Ventileinheit (200) mit einem zweiten Ventilelement (210),
wobei die erste Ventileinheit (100) und die zweite Ventileinheit (200) jeweils drei Ventilanschüsse (101, 102, 103; 201, 202, 203) aufweisen,
wobei das erste Ventilelement (110) und das zweite Ventilelement (210) in einem gemeinsamen Ventilgehäuse (10) derart angeordnet und ausgebildet sind, dass sie in einer ersten Ventilelementstellung einen ersten Ventilanschluss (101, 201) mit einem dritten Ventilanschluss (103, 203) fluidisch koppeln und in einer zweiten Ventilelementstellung einen zweiten Ventilanschluss (102, 202) mit dem dritten Ventilanschluss (103, 203) fluidisch koppeln;
wobei das erste Ventilelement (110) und das zweite Ventilelement (210) mittels einer Betätigungseinrichtung gemeinsam in die erste Ventilelementstellung oder zweite Ventilelementstellung bewegbar sind.

2. Ventil (1, 1a) nach Anspruch 1, wobei in jedem der beiden Ventilelemente (110, 210) ein Durchgangskanal (120, 220) ausgebildet ist, der in der ersten Ventilstellung den ersten Ventilanschluss (101, 201) mit dem dritten Ventilanschluss (103, 203) und in der zweiten Ventilstellung den zweiten Ventilanschluss (102, 202) mit dem dritten Ventilanschluss (102, 203) fluidisch koppelt.

3. Ventil (1, 1a) nach Anspruch 1 oder 2, wobei die beiden Ventilelemente (110, 210) Teil eines gemeinsamen Ventilelements sind, das um seine Drehachse drehbar im gemeinsamen Ventilgehäuse (10) aufgenommen ist.

4. Ventil (1, 1a) nach einem der Ansprüche 1 bis 3, wobei mindestens eines der beiden Ventilelemente (110, 210) zylinderförmig ausgebildet ist.

5. Ventil (1, 1a) nach einem der Ansprüche 2 bis 4, wobei der Durchgangskanal (120, 220) eines jeden Ventilelements (110, 210) im Inneren des jeweiligen Ventilelements (110, 210) ausgebildet ist, und wobei der Durchgangskanal (120, 220) eines jeden Ventilelements (110, 210) zwei Kanalöffnungen aufweist, die an der Außenseite des Ventilelements (110, 210) in einem Winkelabstand von im Wesentlichen 90° voneinander angeordnet sind.

6. Ventil (1, 1a) nach einem der Ansprüche 2 bis 5, wobei der Durchgangskanal (120, 220) eines jeden Ventilelements (110, 210) wenigstens zwei in einer horizontalen Ebene angeordnete Kanalabschnitte (112a, 112b) aufweist, die im Inneren des entsprechenden Ventilelements (110, 210) unter einem Winkel von größer 90° ineinander übergehen.

7. Ventil (1, 1a) nach einem der vorhergehenden Ansprüche, ferner umfassend die Betätigungseinrichtung, wobei die Betätigungseinrichtung mit den beiden Ventilelementen (110, 210) gekoppelt ist und dazu vorgesehen ist, die beiden Ventilelemente (110, 210) gemeinsam in die erste Ventilstellung, die zweite Ventilstellung oder in eine Sperrstellung zu bewegen.

8. Ventil (1, 1a) nach Anspruch 7, wobei die Betätigungseinrichtung einen Schrittmotor umfasst, der dazu vorgesehen ist, in Abhängigkeit einer gewünschten Durchflussrate die beiden Ventilelemente (110, 210) schrittweise zu bewegen.

9. Ventil (1, 1a) nach einem der vorhergehenden Ansprüche, ferner umfassend eine Sensoreinrichtung (50), welche dazu vorgesehen ist, die Temperatur und/oder den Durchfluss des durch das Ventil (1, 1a) fließenden Wärmemittels und/oder Kältemittels zu erfassen.

10. Ventil (1, 1a) nach Anspruch 9, wobei die Sensoreinrichtung (50) zur Messung der Temperatur und/oder des Durchflusses wenigstens einen Temperatursensor (52a, 52b) und/oder wenigstens eine Strömungssensor (54a, 54b) umfasst, der/die in oder in der Nähe der ersten Ventileinheit (100) und/oder in oder in der Nähe der zweiten Ventileinheit (200) angeordnet ist/sind.

11. Ventil (1, 1a) nach einem der vorhergehenden Ansprüche, ferner umfassend eine Steuereinrichtung zur Steuerung der die beiden Ventilelemente (110, 210) betätigenden Betätigungseinrichtung auf der Grundlage von Sensordaten und/oder externen Steuerbefehlen.

12. System zur Heizung und/oder Kühlung, umfassend:
einen Heizkreislauf (95, 97) zur Bereitstellung von Wärme;
einen Kühlkreislauf (91, 93) zur Bereitstellung von Kälte; und
das Ventil (1, 1a) gemäß einem der Ansprüche 1 bis 11 zum wahlweisen Koppeln des Heizkreislaufes (95, 97) und des Kühlkreislaufes (91, 93) mit einem Verbraucher.

13. System nach Anspruch 12, wobei der Verbraucher mit dem dritten Ventilanschluss (103, 203) der beiden Ventileinheiten (100, 200) gekoppelt ist, wobei der Heizkreislauf (95, 97) und der Kühlkreislauf (91, 93) mit dem ersten Ventilanschluss (101, 201) bzw. dem zweiten Ventilanschluss (102, 202) der beiden Ventileinheiten (100, 200) gekoppelt ist.

14. System nach einem der Ansprüche 12 oder 13, wobei das Ventil (1, 1a) auf der Grundlage von Sensordaten und/oder externen Steuerdaten derart ansteuerbar ist, dass das Ventil (1, 1a) den Verbraucher wahlweise mit dem Heizkreislauf (95, 97) oder Kühlkreislauf (91, 93) koppelt oder entkoppelt.

15. Verfahren zum Messen der einem Verbraucher zugeführten Wärmemenge und/oder Kältemenge, wobei das Verfahren mit Hilfe des Ventils (1, 1a) gemäß einem der Ansprüche 9 bis 11 durchgeführt wird, welches dazu ausgelegt ist, den Verbraucher mit einem Heizkreislauf (95, 97) und/oder einem Kühlkreislauf (91, 93) wahlweise fluidisch zu koppeln, wobei das Verfahren folgende Schritte umfasst:
Messen der Temperatur des durch die erste Ventileinheit (100) des Ventils (1, 1a) strömenden und dem Verbraucher zugeführten Wärmemittels und/oder Kältemittels;
Messen der Temperatur des durch die zweite Ventileinheit (100) des Ventils (1, 1a) strömenden und vom Verbraucher abgeführten Wärmemittels und/oder Kältemittels;
Messen der Durchflussrate des durch die erste Ventileinheit (100) strömenden Wärmemittels und/oder Kältemittels, und/oder Messen der Durchflussrate des durch die zweite Ventileinheit (200) strömenden Wärmemittels und/oder Kältemittels;
Ermitteln einer Temperaturdifferenz aus der erfassten Temperatur des durch die erste Ventileinheit (100) strömenden Wärmemittels und/oder Kältemittels sowie aus der erfassten Temperatur des durch die zweite Ventileinheit (200) strömenden Wärmemittels und/oder Kältemittels; und
Bestimmen der dem Verbraucher zugeführten Wärmemenge und/oder Kältemenge aus der ermittelten Temperaturdifferenz und der gemessenen Durchflussrate.

16. Verfahren nach Anspruch 15, wobei das Messen der Temperaturen des Wärmemittels und/oder Kältemittels in den beiden Ventileinheiten (100, 200) sowie das Messen der Durchflussrate des Wärmemittels und/oder Kältemittels in der ersten Ventileinheit (100) und/oder in der zweiten Ventileinheit (200) im Wesentlichen kontinuierlich erfolgt.

17. Verfahren nach Anspruch 15 oder 16, wobei die vom Wärmemittel stammenden Temperaturmesswerte und Durchflussratenmesswerte separat von den vom Kältemittel stammenden Temperaturmesswerten und Durchflussratenmesswerten geloggt werden, um die verbrauchte Wärmemenge und Kältemenge getrennt voneinander bestimmen zu können.

18. Verfahren zum Detektieren einer Leckage in einem Heiz- und/oder Kühlkreislauf (91, 93; 95, 97), wobei das Verfahren mit Hilfe des Ventils (1, 1a) gemäß einem der Ansprüche 9 bis 11 durchgeführt wird, welches dazu ausgelegt ist, einen Verbraucher mit dem Heizkreislauf (95, 97) und/oder dem Kühlkreislauf (91, 93) wahlweise fluidisch zu koppeln, wobei das Verfahren folgende Schritte umfasst:
Messen der Durchflussrate des durch eine erste Ventileinheit (100) strömenden und dem Verbraucher zugeführten Wärmemittels und/oder Kältemittels;
Messen der Durchflussrate des durch die zweite Ventileinheit (200) strömenden und von dem Verbraucher abgeführten Wärmemittels und/oder Kältemittels; und
Bestimmen, dass eine Leckage vorliegt, wenn eine Differenz aus den in der ersten Ventileinheit (100) und der zweiten Ventileinheit (200) gemessenen Durchflussraten einen vorgegebenen Schwellenwert überschreitet.

19. Verfahren nach Anspruch 18, wobei, wenn der vorgegebene Schwellenwert überschritten wird, das Verfahren ferner umfasst:
Automatisches Schalten des Ventils in eine Sperrstellung; und/oder
Erzeugen und Ausgeben eines Leckage-Warnsignals.
